# FASCICULE DE BREVET EUROPEEN

(11) **EP 2 215 701 B1**
(45) Date de publication et mention de la délivrance du brevet: **19.11.2014**
(21) Numéro de dépôt: 08863260.9
(22) Date de dépôt: 02.12.2008
(51) Int. Cl.: H02J 7/34, H02J 7/14, B60R 16/02, H02J 7/16, H02J 1/10

(54) **CIRCUIT ELECTRIQUE D'UN VEHICULE AUTOMOBILE**
ELEKTRISCHE SCHALTUNG FÜR AUTOMOBILE
ELECTRIC CIRCUIT FOR AUTOMOBILE

(30) Priorité: 03.12.2007 FR 0759532
(43) Date de publication de la demande: 11.08.2010
(73) Titulaire: Peugeot Citroën Automobiles SA, 78140 Vélizy-Villacoublay (FR)
(72) Inventeur: PERSEVAL, Hervé, F-91460 Marcoussis (FR); BOUCLY, Bernard, F-78150 Le Chesnay (FR)
(74) Mandataire: Ménès, Catherine
(86) Numéro de dépôt international: PCT/FR2008/052185
(87) Numéro de publication internationale: WO 2009/077703

(56) Documents cités:
- WO-A-02/066293
- WO-A-2004/034543
- FR-A- 2 853 154

## Description

### Domaine technique

La présente invention revendique la priorité de la demande française 0759532 déposée le 3 décembre 2007.

La présente invention concerne les réseaux de bord pour véhicules automobiles, et plus particulièrement les réseaux de bord pour véhicules équipés d'une machine électrique réversible de type alterno-démarreur qui, lors d'un démarrage du moteur thermique, constitue un organe consommateur d'énergie électrique, et qui en dehors de cette période de démarrage, peut fonctionner dans un mode générateur de courant. L'invention s'applique tout particulièrement aux réseaux de bord équipés d'un alterno-démarreur relativement puissant, comme nécessitée par une fonction STOP-AND-START et/ou pour le démarrage des moteurs thermiques de relativement grandes cylindrées.

### Etat de la technique antérieure

Certains véhicules automobiles sont équipés d'alterno-démarreurs c'est-à-dire d'une machine électrique capable de démarrer le moteur thermique en utilisant une source électrique telle une batterie ou de générer un courant électrique stocké dans la batterie quand le véhicule est entrainé par le moteur thermique. Ces machines peuvent être notamment utilisées dans les véhicules équipés d'une fonction « STOP & START» pour lesquels le moteur thermique s'arrête dès que le véhicule est à l'arrêt et redémarre par exemple dès que le conducteur accélère de nouveau. Plus précisément, sur ces véhicules, la fonction STOP & START peut se décomposer en trois phases :
la phase de démarrage initiale du moteur thermique -sue celui-ci soit du type à allumage commandé (moteur « essence ») ou à allumage par compression (moteur « diesel »). Cette phase initiale est encore appelée phase de premier démarrage.

- La phase de roulage du véhicule avec le moteur thermique tournant, générant une accélération du véhicule nulle (maintien de la vitesse), positive ou négative (décélération). Lors des situations de décélération, le système STOP & START peut être conçu pour transforme une partie de l'énergie cinétique du véhicule en énergie électrique, énergie électrique qui pourra être utilisée par l'ensemble des organes consommateurs du réseau de bord du véhicule ou stockées par exemple au moyen de la batterie. En complément, le système STOP & START coupe l'alimentation du moteur thermique dès que le véhicule est à l'arrêt, ou même dès qu'un arrêt est anticipé, par exemple dès que la vitesse du véhicule devient inférieure à un certain seuil bas de vitesse, ce qui permet de réduire la consommation de carburant et donc de limiter les émissions polluantes.
- La phase de redémarrage du moteur thermique, commandée par la volonté du conducteur, marquée par exemple par l'enfoncement de la pédale d'accélérateur.

Les machines électriques de type alterno-démarreur qui permettent le redémarrage du moteur ont des besoins énergétiques élevés. Or si lors du premier démarrage, la plupart des consommateurs électriques du véhicule sont normalement à l'arrêt, tel n'est pas le cas lors d'un redémarrage, des équipements tels que le climatiseur, le système d'éclairage, le système audio-visuel du véhicule, etc... pouvant être actifs, et devoir le rester pour le confort et la sécurité des occupants du véhicule.

Or la machine électrique dédiée au redémarrage a une forte consommation en courant qui peut générer des chutes de tensions élevées sur l'ensemble du réseau de bord et dégrader certaines prestations nécessitant de l'énergie électrique, résultant dans une perception de non qualité de l'ensemble du véhicule, avec un défaut qui plus est ressenti comme aléatoire car l'usager du véhicule n'associe pas nécessairement le redémarrage du moteur du véhicule avec ce défaut (d'autant que le conducteur n'a de fait pas commander expressément l'arrêt du moteur).

Pour remédier à ce problème, différentes solutions ont déjà été proposées. La plus simple, et déjà mise en oeuvre sur des véhicules commerciaux disposant de la fonction STOP-&-START consiste à augmenter la puissance électrique disponible en associant à la batterie principale une seconde batterie. La batterie principale sert à fournir la puissance électrique nécessaire lors des phases de premier démarrage et de redémarrage. Lors de ce redémarrage, les fonctions électriques sensibles aux variations de tension sont alimentées par une deuxième batterie - qui est alors l'unique source d'énergie pour ces fonctions lors de cette phase. En dehors de cette phase de redémarrage (dont la durée est typiquement inférieure à 1 s), ces fonctions sensibles sont alimentées par le générateur du véhicule (par exemple l'alternateur).

Cette solution a un coût relativement élevé non seulement du fait de la batterie additionnelle - qui comme la batterie principale doit être généralement remplacée par exemple tous les deux/trois ans mais aussi du fait que cette batterie additionnelle ne peut pas toujours être implantée dans le compartiment moteur et doit par exemple être logée au niveau du coffre, d'où une nécessité de refonte de toute l'architecture électrique du véhicule voire même de toute la structure du véhicule. De plus la masse de cette batterie additionnelle et des faisceaux électriques qui lui sont dédiés alourdit le véhicule ce qui va à l'encontre d'un des objectifs de ce type de système, à savoir la réduction des consommations de carburant et des émissions polluantes. Enfin, cette batterie additionnelle est généralement dédiée aux organes consommateurs les plus sensibles aux chutes de tension, donc elle ne constitue pas nécessairement une solution complète au problème de la dégradation des prestations électriques, certains équipements non alimentés par cette batterie additionnelle pouvant voire leur performance diminuée. Ce problème est aggravé par la multiplicité des accessoires prévus pour être raccordés à un réseau de bord, comme par exemple des consoles de jeux, consoles vidéo, réfrigérateur, chauffe-biberon etc., de sorte qu'il n'est pas toujours aisé d'assurer un bon dimensionnement des équipements, sauf à les sur-dimensionner de façon importante.

Une autre possibilité consiste à proposer à compléter la batterie par un autre type de moyen de stockage de l'énergie, comme par exemple un condensateur. La batterie fournit alors la puissance électrique nécessaire pour démarrer le moteur thermique (phase de premier démarrage) du véhicule et sert à l'alimentation de l'ensemble des fonctions qui lui sont connectées. Le second moyen de stockage est essentiellement utilisé lors des redémarrages. Mais comme la tension de référence de ce second moyen de stockage est variable, par exemple entre une à trois fois la valeur de la tension de référence du véhicule, ce second moyen de stockage ne peut être connecté au réseau de bord que si l'on prévoit un convertisseur de type DC/DC ou analogue. Là encore, cette solution entraine un surcoût important, des problèmes d'implantation (le convertisseur peut nécessiter par exemple un volume de l'ordre de 5l) et d'augmentation de la masse totale du véhicule (de l'ordre par exemple de 5 à 10 kg).

Plus récemment, certains véhicules commercialisés sont munis d'un dispositif de maintien de la tension, encore connu sous l'abréviation DMT, monté en série avec la batterie. Le DMT est en fait un convertisseur de tension DC/DC compensateur de puissance instantanée, au travers duquel les organes sensibles aux sous-tensions sont alimentés au moins lors des phases de redémarrage, le DMT prélevant alors son énergie sur la batterie. Cette solution pose en fait des problèmes similaires à la solution consistant à dédoubler la batterie, avec donc une complexification de l'architecture électrique du véhicule, une augmentation de la masse du véhicule, une perte de volume due à l'encombrement du DMT et une diminution des performances pour les organes non alimentés par ce convertisseur.

Par ailleurs, il est connu du brevet FR2853154 un système d'alimentation en énergie électrique d'organe consommateurs embarqués à bord d'un véhicule automobile comportant des moyens formant générateur d'énergie électrique dont la sortie est raccordée par un réseau électrique à des premiers moyens de stockage d'énergie électrique - tels par exemple une batterie électrochimique - et à un premier organe consommateur. Un second organe consommateur est raccordé au réseau électrique à travers des moyens formant source d'énergie auxiliaire, tels que par exemple un condensateur, et des moyens de commutation dont le fonctionnement est piloté par des moyens de commande pour permettre une charge des seconds moyens de stockage à partir du reste du système et un raccordement de ceux-ci en série avec le second organe consommateur pour assurer son alimentation lors de son activation. Un tel dispositif permet d'augmenter la tension et la puissance aux bornes du second consommateur lors de son activation, et donc permet d'atténuer les chutes de tension associées à la mise en route d'organes gros consommateurs d'énergie, sans pour autant sur-dimensionner les moyens de génération et de stockage de l'énergie. Pour autant, ce dispositif a pour seul objet la fourniture de puissance instantanée à une fonction et n'offre pas de solutions lors des phases d'arrêt moteur.

### Brève description de l'invention

La présente invention a ainsi pour but une architecture de réseau comportant un alterno-démarreur et un condensateur permettant de minimiser les chutes de tensions lorsque l'alterno-démarreur est en mode démarreur.

Selon l'invention, ce but est atteint par un circuit électrique comportant une ligne de masse, un réseau de bord avec une batterie reliée au réseau de bord et reliée à la ligne de masse par une première branche comportant un premier commutateur et par une seconde branche comportant un deuxième commutateur, un alternateur connecté à la batterie, un démarreur et des organes consommateurs reliés au réseau de bord et à la ligne de masse, le circuit comportant de plus un dispositif de maintien de tension formé par un pont reliant un point de la première branche entre la batterie et le premier commutateur à un point de la seconde branche entre le deuxième commutateur et le la ligne de masse et un condensateur relié au pont en un point entre le troisième commutateur et la seconde branche et un dispositif interne d'alimentation n'autorisant le passage du courant dans la seconde branche que lors de la recharge du condensateur.

La présente invention s'applique tout particulièrement aux circuits électriques comportant un alterno-démarreur.

Avec l'architecture de réseau proposée selon l'invention, la tension peut être maintenue notamment lors du démarrage, c'est-à-dire lorsque l'alterno-démarreur fonctionne en mode démarreur, et constitue donc une charge importante pour le réseau, de sorte que les autres consommateurs électriques ne sont pas perturbés par la chute de tension normalement générée par l'activation de la fonction démarrage.

Ce but est atteint par la simple utilisation de commutateurs et d'un dispositif interne d'alimentation qui peut certes être du type convertisseur DC/DC mais néanmoins...., donc d'un coût (à la fois financier et d'encombrement) sans commune mesure avec celui des convertisseurs préconisés par l'art antérieur.

Le circuit selon l'invention peut être obtenu à partir d'un circuit conventionnel auquel sont ajoutés un certain nombre d'éléments (en pratique la seconde branche, le pont, l'unité d'alimentation interne, le condensateur et quelques commutateurs), mais sans pour autant devoir modifier tout le reste de l'architecture électrique du véhicule, autrement dit l'invention est particulièrement simple à mettre en oeuvre dans le cas où la fonction STOP-AND-START est conçue comme une option, car le circuit conventionnel du véhicule n'a pas à être redéfini.

Dans une variante préférée, le circuit est conçu d'une manière telle que la première branche relie le pole négatif de la batterie à la ligne de masse.

Dans une variante, le dispositif interne d'alimentation comporte une diode et une bobine d'inductance. Il peut également s'agir d'un autre type de convertisseur DC/DC (caractéristiques..), notamment d'un convertisseur de type abaisseur.

Le convertisseur peut être en fait constitué par l'association en série d'une pluralité de condensateurs. Ce ou ces condensateurs sont par ailleurs avantageusement des supercondensateurs, encore connus sous le terme d'ultra-capacités ou d'UCAP dont la technologie de stockage d'énergie par des supercondensateurs repose sur le principe de fonctionnement des condensateurs classiques, et offre ainsi des performances en densités d'énergie plus faibles qu'une batterie électrochimique mais avec une capacité au stockage / déstockage en fortes puissances. Les supercondensateurs supportent un nombre de cycles de charge et de décharge très supérieur à celui des batteries conventionnelles, les spécialisant dans les applications requérant des sources de puissance élevée sur des temps courts. Les supercondensateurs actuellement commercialisés sont typiquement constitués d'un élément cylindrique formé par l'enroulement sur lui-même d'un feuillet composé d'une feuille d'aluminium formant une anode, d'un séparateur en papier et d'une autre feuille d'aluminium formant une cathode. Les feuilles formant l'anode et la cathode subissant typiquement un traitement de surface pour favoriser la formation d'une fine couche d'alumine et surtout l'adhésion d'une couche active, comme par exemple une mousse de carbone. L'élément ainsi formé est ensuite imprégné d'un électrolyte et l'ensemble est enfermé dans un boitier étanche afin d'éviter l'évaporation de l'électrolyte en prévoyant, bien sûr, des moyens pour connecter l'anode et la cathode à un circuit électrique.

Dans une variante de l'invention, les commutateurs sont avantageusement gérés par une unité de pilotage commandant les commutations en fonction du mode de fonctionnement de l'alterno-démarreur. De préférence, cette gestion va également tenir compte de paramètres extérieurs tels que la vitesse du véhicule, le régime du moteur thermique, le niveau de charge du condensateur, le niveau de charge de la batterie et le niveau de charge du réseau de bord.

### Brève description des figures

D'autres avantages et particularités de l'invention ressortent de la description de modes de réalisation faite ci-après en référence aux dessins annexés dans lesquels :
La figure 1 est un schéma illustrant la chute de tension du réseau de bord lors d'un démarrage si aucun procédé de compensation n'est prévu ;
La figure 2 est un schéma simplifié du circuit électrique d'un véhicule automobile muni d'un dispositif de maintien de tension centralisé selon l'invention ; et
La figure 3, illustre la variation de la tension de tension du réseau de bord, et du condensateur lors d'un redémarrage pour un circuit électrique conforme à la figure 2.

### Exposé détaillé de modes de réalisation de l'invention

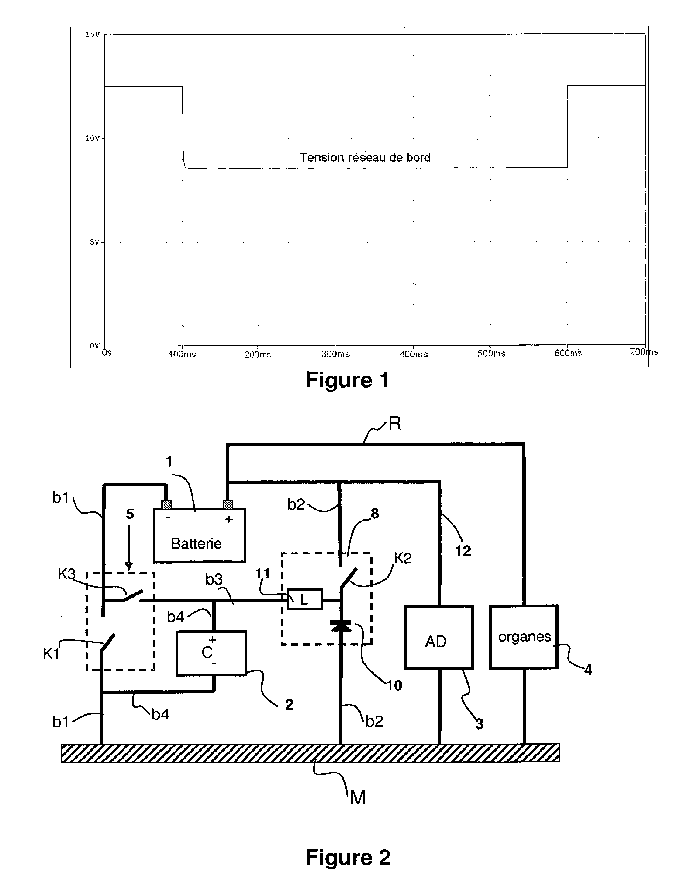

La figure 1 est une simulation montrant la variation de la tension du réseau de bord lors d'un redémarrage sur un véhicule équipé d'une fonction de redémarrage de type STOP-AND-START. On peut constater que pendant une période d'environ 500ms, la tension du réseau de bord normalement de l'ordre de 12,5 Volt (dans l'hypothèse d'un véhicule équipé d'une batterie conventionnelle d'un même voltage), chute de façon quasi instantanée à environ 8 Volts.

Pour éviter une telle chute de tension, la présente invention propose de modifier le circuit électrique du véhicule en lui ajoutant un dispositif de maintien de tension dit centralisé en ce sens qu'il n'est pas dédié à un (ou quelques) organes consommateurs spécifiques. Ce dispositif est illustré à la figure 2. Il doit être souligné que ce dispositif est entièrement situé dans l'environnement proche de la batterie, et que son implantation ne requiert que des modifications relativement simples du circuit électrique du véhicule.

Sur cette figure 2, on retrouve les éléments d'un circuit conventionnel, à savoir notamment un réseau de bord R, avec une alimentation principale constituée par une batterie 1, par exemple une batterie électrochimique ou plus généralement tout moyen équivalent d'accumulation de tension.

La batterie est alimentée par un alterno-démarreur 3, relié à la batterie par une branche 12 et par ailleurs relié à la masse M. Cet alterno-démarreur 3 est une machine électrique réversible qui joue un rôle d'alternateur et donc de générateur d'énergie électrique (en dehors des démarrages) et qui lors des démarrages (par exemple le premier démarrage ou les redémarrages), entraine l'arbre du moteur thermique. Dans une variante de l'invention ici non représentée, un alternateur est substitué à l'alterno-démarreur, le démarrage et les redémarrages étant alors assurés par un démarreur qui constitue alors une charge électrique.

Tous ces organes, ainsi que l'alterno-démarreur sont reliés d'une part à la tension Ur du réseau de bord (par exemple 12,5 Volt) et d'autre part à un potentiel de masse M. La batterie est également reliée à ce potentiel de masse par la branche b1 du réseau, reliée au pole négatif de la batterie, et une branche b2 relié au pole positif.

Le dispositif de maintien de tension selon l'invention est constitué essentiellement par l'interposition d'un pont b3 reliant les deux branches b1 et b2, un condensateur 2 étant placé sur une ligne b4 reliant ce pont b3 à la branche b1. Deux commutateurs pilotés K1 et K3 sont respectivement montés sur la branche b1 et le pont b3, K1 étant plus précisément placé sur la partie de la branche b1 entre la le pont b3 et la branche b4, et K3 sur la partie du pont b3 entre la branche b1 et la branche b4 portant le condensateur. Les commutateurs K1 et K3 sont pilotés au moyen d'un contrôleur, ici généralement figuré par la référence 5, et commandé par exemple par le contrôle moteur - ou plus précisément le module dédié au démarrage et redémarrage du véhicule.

Lorsque le commutateur K3 est en position passante, alors que le commutateur K1 est en position ouverte, le condensateur est placé en série avec la batterie du véhicule. Cette configuration correspond à la phase de démarrage ou de redémarrage du moteur thermique.

Sur la branche b2 on a par ailleurs un ensemble 8 formant un dispositif interne d'alimentation, comportant une diode 10 et une bobine d'inductance 11, associées à un commutateur K2, également piloté par exemple par le dispositif 5 ou un dispositif dédié à ce commutateur. Dans une variante, la diode 10 peut être remplacée par un interrupteur ce qui fait évoluer la structure de type BUCK vers une structure de type BUCK-BOOST. L'ensemble 8 s'analyse donc d'un point du vue électrique comme un convertisseur DC/DC éventuellement réversible.

Pour le rechargement condensateur à travers l'ensemble 8, le commutateur K2 est commandé (éventuellement en fréquence), K3 est ouvert et K1 est passant.

Plus précisément, la tension de charge du condensateur est obtenue par le dispositif interne d'alimentation 8. Avantageusement, cette tension de charge peut être ajustée en fonction des caractéristiques électriques de l'alterno-démarreur, du besoin des fonctions/ organes électrique du véhicule et de l'état de santé de la batterie (tension à vide et impédance interne et température).

Ainsi, la recharge du condensateur pourra être commandée lors des décélérations du véhicule ou moteur correspondant à une phase de récupération d'énergie cinétique en énergie électrique. Cette recharge peut également être réalisée avec des conditions de roulage telles que la vitesse du véhicule est stabilisée ou en accélération du véhicule ou moteur, lorsque les conditions de charge du réseau de bord électrique le permettent.

Par ailleurs, la recharge du condensateur peut également n'être commandée que lorsque la tension du condensateur est inférieure à un seuil de consigne prédéterminé dans (8) permettant de garantir les performances nominales de l'ensemble des fonctions / organes lors du redémarrage ou du premier démarrage.

Les commutateurs pilotés K1 et K3 doivent être capables de faire passer des courants de l'ordre de 700A ou plus (courant démarreur), ceci pendant une période de l'ordre de 0,5s comme montré à la figure 1. Des commutateurs de technologie dite Power Mos peuvent par exemple convenir pour ce faire.

L'unité de pilotage des commutateurs K1, K3 et de préférence également K2 doit bien sûr être capable de gérer les commutations en fonction de l'information sur l'état de fonctionnement de l'alterno-démarreur, mais de préférence également d'informations extérieures telles que la vitesse du véhicule ou du moteur, la tension (niveau de charge) du condensateur et/ou de la batterie et/ou du réseau de bord, comparées à des niveaux de référence.

De part la présence de la diode 10, on note que le condensateur ne peut ainsi se décharger que vers la batterie, autrement dit le courant circule bien toujours dans le même sens. Avantageusement, l'unité interne d'alimentation est conçue pour recharger le condensateur par un courant moyen de l'ordre de 40 A, durant une période de l'ordre de 10s, ceci pour un condensateur de par exemple 300F, constitué d'au moins une UCAP de 2,5 Volts. Même si l'unité interne d'alimentation est bien du type convertisseur DC/DC, elle n'est pas dimensionnée pour alimenter le réseau de bord de façon continue, et constitue donc de fait un « micro-convertisseur » de très faible encombrement et faible masse.

La capacitance du condensateur ainsi que sa tension maximale pourront être ajustées en fonction des contraintes de performances: dégradation de la batterie, puissance de démarrage, ou contraintes d'un ou plusieurs fonctions/organes alimentés nécessitant une tension plus élevée dans la phase de démarrage. En phase de décélération du véhicule, une partie de l'énergie cinétique peut servir à la recharge du condensateur à travers l'alternateur.

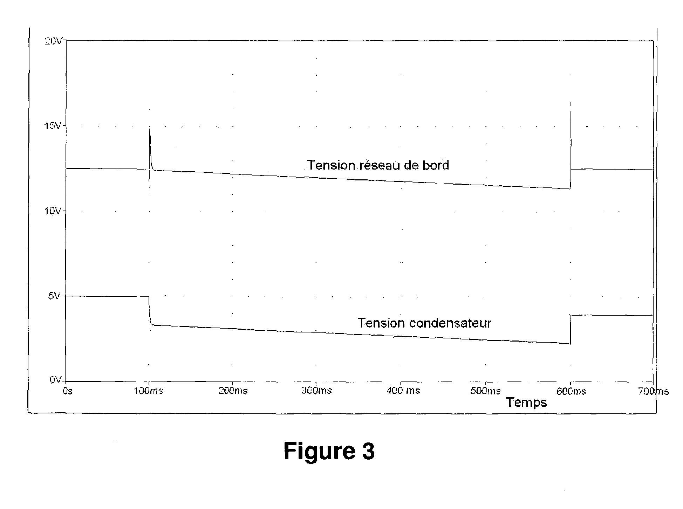

A la figure 3, on a représenté la variation de la tension du réseau de bord lors d'un démarrage, à l'analogue de la figure 1, mais cette fois avec un circuit équipé du dispositif de maintien de tension selon l'invention. On constate la formation d'un léger pic de tension liés à la fermeture et l'ouverture des commutateurs K1 et K3 mais pratiquement instantanés, de sorte qu'ils ne produisent normalement pas de perturbation de fonctionnement des différents consommateurs d'énergie électrique du réseau adaptés à de tels pics. Une très légère dégradation de la tension du réseau de bord se produit par ailleurs au fur et à mesure que s'écoule la phase de démarrage, pour atteindre de l'ordre de 1 Volt en fin de période, mais là encore, ceci est normalement d'un ordre de grandeur compatible avec un fonctionnement nominal des consommateurs.

A noter que si la charge de l'alterno-démarreur n'est pas constante pendant la phase de démarrage ou de redémarrage du moteur thermique, des variations de tension importantes peuvent se produire qui peuvent être minimisées (écrêtées) par une régulation du commutateur K3.

Sur cette figure 3, on a représenté de plus la tension du condensateur, ce qui fait apparaitre qu'un démarrage constitue une perte de charge équivalente à une chute de tension seulement de l'ordre de 1 Volt. Comme cette variation de tension est bien inférieure à la tension de la batterie, la recharge du condensateur est beaucoup moins contraignante que si le condensateur était rechargé via une mise en parallèle sur la batterie.

Le dispositif de maintien de tension selon l'invention permet par ailleurs de compenser en partie la dégradation des performances de la batterie par temps froid (les performances du condensateur n'étant essentiellement pas affectées par des températures négatives). Il est également tout particulièrement avantageux avec des moteurs dont la cylindrée excède par exemple 1,6l, pour lesquels une puissance importante est nécessaire lors du démarrage et des redémarrages.

## Revendications

1. Circuit électrique d'un véhicule automobile comportant
• une ligne de masse (M) ;
• un réseau de bord (R) avec une batterie (1) reliée au réseau (R) et reliée à la ligne de masse (M) par une première branche (b1) comportant un premier commutateur (K1) et par une seconde branche (b2) comportant un deuxième commutateur (K2) ;
• un alternateur (3) connecté à la batterie (1), un démarreur et des organes consommateurs (4) reliés au réseau de bord et à la ligne de masse (M) ;
• un dispositif de maintien de tension comportant
- un pont (b3) reliant un point de la première branche (b1) entre la batterie (1) et le premier commutateur (K1) à un point de la seconde branche (b2) entre le deuxième commutateur (K2) et la ligne de masse (M) et
- un condensateur (2) relié au pont (b3) en un point entre le troisième commutateur (K2) et la seconde branche (b2) et un dispositif interne d'alimentation (8) n'autorisant le passage du courant dans la seconde branche b2 que lors de la recharge du condensateur (2).

2. Circuit électrique selon la revendication 1, caractérisé en ce le démarreur et l'alternateur forment un alterno-démarreur (3).

3. Circuit électrique selon la revendication 1 ou la revendication 2, **caractérisé en ce que** la première branche (b1) relie le pole négatif de la batterie à la ligne de masse (M).

4. Circuit électrique selon l'une quelconque des revendications précédentes **caractérisé en ce que** le dispositif interne d'alimentation (8) comporte une diode (10) et une bobine d'inductance (11).

5. Circuit électrique selon l'une quelconque des revendications précédentes, **caractérisé en ce que** le condensateur est du type supercondensateur.

6. Circuit électrique selon l'une quelconque des revendications précédentes, **caractérisé en ce que** le condensateur est formé par plusieurs condensateurs montés en série.

7. Circuit électrique selon l'une quelconque des revendications précédentes, **caractérisé par** une unité de pilotage (5) des commutateurs K1, K2 et K3 commandant les commutations en fonction du mode de fonctionnement de l'alterno-démarreur.

8. Circuit selon la revendication 7, **caractérisé en ce que** l'unité de pilotage (5) gère également au moins une information extérieure choisie parmi la vitesse du véhicule, le régime du moteur thermique du véhicule, le niveau de charge du condensateur, le niveau de charge de la batterie et le niveau de charge du réseau de bord.

9. Circuit selon l'une quelconque des revendications précédentes, **caractérisé par** une régulation du commutateur K3 pour écrêter les variations de tension lors des phases de démarrage ou de redémarrage du moteur thermique.

## Patentansprüche

1. Stromkreis eines Kraftfahrzeugs, umfassend
• eine Massenleitung (M),
• ein Bordnetz (R) mit einer Batterie (1), die mit dem Netz (R) verbunden ist und mit der Massenleitung (M) durch einen ersten Zweig (b1) verbunden ist, der einen ersten Schalter (K1) umfasst, und durch einen zweiten Zweig (b2), der einen zweiten Schalter (K2) umfasst;
• einen Generator (3), der mit der Batterie (1) verbunden ist, einen Anlasser und Verbrauchsorgane (4), die mit dem Bordnetz und der Massenlinie (M) verbunden sind,
• eine Vorrichtung zur Erhaltung der Spannung, umfassend
- eine Brücke (b3), die einen Punkt des ersten Zweigs (b1) zwischen der Batterie (1) und dem ersten Schalter (K1) mit einem Punkt des zweiten Zweigs (b2) zwischen dem zweiten Schalter (K2) und der Massenleitung (M) verbindet und
- einen Kondensator (2), der mit der Brücke (b3) an einem Punkt zwischen dem dritten Schalter (K2) und dem zweiten Zweig (b2) verbunden ist und eine interne Versorgungsvorrichtung (8), die den Durchfluss des Stroms in den zweiten Zweig b2 nur bei der Aufladung des Kondensators (2) zulässt.

2. Stromkreis nach Anspruch 1, **dadurch gekennzeichnet, dass** der Anlasser und der Generator einen Startergenerator (3) bilden.

3. Stromkreis nach Anspruch 1 oder Anspruch 2, **dadurch gekennzeichnet, dass** der erste Zweig (b1) den negativen Pol der Batterie mit der Massenleitung (M) verbindet.

4. Stromkreis nach einem der vorhergehenden Ansprüche, **dadurch gekennzeichnet, dass** die interne Versorgungsvorrichtung (8) eine Diode (10) und eine Induktionsspule (11) umfasst.

5. Stromkreis nach einem der vorhergehenden Ansprüche, **dadurch gekennzeichnet, dass** der Kondensator vom Typ Superkondensator ist.

6. Stromkreis nach einem der vorhergehenden Ansprüche, **dadurch gekennzeichnet, dass** der Kondensator aus mehreren Kondensatoren, die in Serie montiert sind, gebildet ist.

7. Stromkreis nach einem der vorhergehenden Ansprüche, **gekennzeichnet, durch** eine Steuereinheit (5) der Schalter K1, K2 und K3, die die Schaltungen je nach dem Betriebsmodus des Startergenerators steuern.

8. Kreis nach Anspruch 7, **dadurch gekennzeichnet, dass** die Steuereinheit (5) auch mindestens eine externe Information verwaltet, ausgewählt aus der Geschwindigkeit des Fahrzeugs, der Betriebsweise der Wärmekraftmaschine des Fahrzeugs, dem Ladeniveau des Kondensators, dem Ladeniveau der Batterie und dem Ladeniveau des Bordnetzes.

9. Kreis nach einem der vorhergehenden Ansprüche, **gekennzeichnet, durch** eine Regelung des Schalters K3, um die Spannungsvariationen bei Anlass- oder Neuanlass der Wärmekraftmaschine zu begrenzen.

## Claims

1. Electrical circuit for a motor vehicle, comprising
• an earth line (M);
• an onboard network (R) with a battery (1) connected to the network (R) and connected to the earth line (M) by a first arm (b1) comprising a first switch (K1) and by a second arm (b2) comprising a second switch (K2);
• an alternator (3) connected to the battery (1), a starter and consuming members (4) connected to the onboard network and to the earth line (M);
• a voltage-maintenance device comprising
- a bridge (b3) connecting a point on the first arm (b1) between the battery (1) and the first switch (K1) to a point on the second arm (b2) between the second switch (K2) and the earth line (M) and,
- a capacitor (2) connected to the bridge (b3) at a point between the third switch (K2) and the second arm (b2) and an internal supply device (8) allowing current to pass in the second branch (b2) only when the capacitor (2) is recharged.

2. Electrical circuit according to claim 1, **characterised in that** the starter and alternator form an alternator/starter (3).

3. Electrical circuit according to claim 1 or claim 2, **characterised in that** the first arm (b1) connects the negative pole of the battery to the earth line (M).

4. Electrical circuit according to any one of the preceding claims, **characterised in that** the internal supply device (8) comprises a diode (10) and an inductance coil (11).

5. Electrical circuit according to any one of the preceding claims, **characterised in that** the capacitor is of the supercapacitor type.

6. Electrical circuit according to any one of the preceding claims, **characterised in that** the capacitor is formed by several capacitors connected in series.

7. Electrical circuit according to any one of the preceding claims, **characterised by** a control unit (5) for the switches K1, K2 and K3 controlling the switchings according to the operating mode of the alternator/starter.

8. Circuit according to claim 7, **characterised in that** the control unit (5) also manages at least one item of external information chosen from the speed of the vehicle, the speed of the thermal engine of the vehicle, the charging level of the capacitor, the charging level of the battery and the charging level of the onboard network.

9. Circuit according to any one of the preceding claims, **characterised by** a regulation of the switch K3 to clip the variations in voltage during phases of starting or restarting of the thermal engine.
